# FASCICULE DE BREVET EUROPEEN

(11) **EP 1 239 139 B1**
(45) Date de publication et mention de la délivrance du brevet: **14.12.2005**
(21) Numéro de dépôt: 02290562.4
(22) Date de dépôt: 07.03.2002
(51) Int. Cl.: F02K 1/72

(54) **Système d'actionnement du capotage mobile d'un inverseur de poussée dans un turboréacteur**
Stellantriebssystem einer Schubumkehrvorrichtung in einem Strahltriebwerk
Thrust reverser actuating system in a turbojet engine

(30) Priorité: 08.03.2001 FR 0103135
(43) Date de publication de la demande: 11.09.2002
(73) Titulaire: AIRCELLE, 76700 Gonfreville l'Orcher (FR)
(72) Inventeur: Dehu, Michel Philippe, 76310 Sainte Adresse (FR); Lesbos, Damien Benoît Marie, 76600 Le Havre (FR); Vauchel, Guy Bernard, 76610 Le Havre (FR)
(74) Mandataire: Chevalier, Renaud Philippe

(56) Documents cités:
- EP-A- 0 852 290
- GB-A- 1 386 232
- US-A- 4 005 822
- US-A- 4 137 711
- US-A- 4 147 028
- US-A- 4 278 220
- US-A- 4 442 987
- US-A- 4 519 561
- US-A- 4 527 391
- US-A- 5 996 937

## Description

L'invention concerne le domaine des turboréacteurs d'avion.

Elle concerne plus précisément un dispositif d'inversion de poussée pour turboréacteur d'avion comprenant une nacelle externe qui définit avec une structure interne un canal annulaire de circulation de la veine de flux secondaire, ledit dispositif d'inversion comportant un ensemble de grilles disposées dans la nacelle, un capotage mobile monté sur la nacelle de manière à pouvoir coulisser le long de glissières, ledit capotage mobile étant susceptible d'être déplacé entre une position avant dans laquelle il obture l'accès aux grilles et une position arrière dans laquelle les grilles sont découvertes, des moyens pour déplacer le capotage mobile par rapport à la nacelle, et des volets susceptibles d'obturer le canal annulaire lorsque le capotage mobile est dans sa position arrière, afin de dévier le flux secondaire vers les grilles, les moyens de déplacement du capotage mobile étant sensiblement disposés dans l'axe médian des glissières qui est parallèle à l'axe du turboréacteur.

Lors du fonctionnement du turboréacteur en poussée directe, le capotage mobile forme tout ou partie de l'extrémité aval de la nacelle, les volets logeant alors dans le capotage mobile et ce dernier obturant les entrées des grilles. Ce capotage mobile est susceptible d'être déplacé axialement vers l'arrière par un système de commande qui comporte par exemple des vérins fixés en amont des grilles, et un déplacement du capotage mobile vers l'arrière entraîne le pivotement d'une pluralités de volets qui viennent obturer le canal et dévier le flux pour former un flux inversé dont le guidage est obtenu au moyen de l'ensemble de grilles disposées sur la périphérie externe du canal et qui sont découvertes après déplacement vers l'aval dudit capotage mobile.

Dans les réalisations connues d'un tel inverseur de poussée de turboréacteur, l'inverseur de poussée est constitué de deux parties, chaque partie comportant une partie demi-cylindrique du capotage mobile, dont les moyens de déplacement comportent par exemple deux vérins, et le pivotement des volets est guidé par exemple par des biellettes de liaison à un point fixe d'articulation de biellettes, situé sur la paroi interne du canal secondaire.

Des exemples de réalisation de tels inverseurs de poussée sont donnés par EP-A-0 109 219. Les figures 1 et 2 montrent schématiquement la disposition des différents organes de l'inverseur de poussée décrit dans EP-A-0 109 219.

La nacelle 1 qui entoure le flux secondaire délivré par la soufflante définit, avec la structure fixe interne 2 du moteur, un canal annulaire 3 dans lequel s'écoule la veine de flux secondaire F2. La nacelle 1 et la structure fixe interne 2 sont supportées par un pylône 4 sous une aile de l'avion. La nacelle 1 comporte une partie amont qui se termine en aval par un cadre rigide 5, et en aval un capotage mobile 6 constitué de deux demi-cylindres 6a, 6b, chacun délimité par une paroi interne 7 délimitant la veine de flux froid F2, et une paroi externe 8 qui assure le profil aérodynamique mobile de la nacelle 1. Les deux parois 7 et 8 divergent vers l'amont et délimitent intérieurement un espace annulaire 9 dans lequel est prévu un ensemble de grilles solidaire du cadre 2 et des vérins 10a, 10b qui assurent le déplacement axial des demi-cylindres 6a et 6b. Des volets 11 articulés en amont sur la paroi interne 7 et en aval sur des biellettes 12, elles-mêmes articulées en 13 sur la structure interne 2, logent dans les demi-cylindres 6a, 6b, lorsque ces demi-cylindres sont rapprochés du cadre 5. Dans cette position amont du capotage mobile 6, les grilles sont renfermées dans l'espace 9.

Lorsque les vérins 10a, 10b s'étendent axialement, le capotage 6 se déplace vers l'aval, les grilles sont alors découvertes. Les biellettes 12 pivotent autour de leurs articulations 13 et les volets 11 viennent obturer le canal annulaire 3 en aval des grilles. Le flux secondaire F2 est dévié vers les grilles et ces dernières dévient le flux F2 vers l'avant de la nacelle à l'extérieur de cette dernière.

Les demi-cylindres 6a et 6b sont montés coulissants au moyen de glissières 14a, 14b, 14c, 14d situés au voisinage du pylône 4 et d'une entretoise 15 diamétralement opposée au pylône 4, le pylône 4, l'entretoise 15 et le cadre 5 étant solidaires de la structure interne fixe 2.

Les glissières 14a, 14b, 14c, 14d jouent au moins trois rôles fondamentaux dans ce type d'inverseur de poussée. Leur premier rôle est de permettre l'accrochage des structures du capotage mobile 6. Le deuxième rôle de ces éléments de guidage est de guider le capotage mobile 6 dans une direction parallèle à l'axe du moteur lors du déplacement du capotage mobile 6. Le troisième rôle est de supporter les efforts aérodynamiques appliqués sur la structure du capotage mobile 6, efforts qui tendent à séparer cette structure de la structure interne 2 entourant le moteur. Le capotage mobile 6 subit deux directions d'efforts, l'une longitudinale et l'autre radiale, qui sont repris par les éléments de guidage 14a, 14b, 14c, 14d situés à chaque extrémité radiale supérieure et inférieure de la structure fixe 2.

Les vérins 10a et 10b, qui pour exemple sont au nombre de deux pour chaque moitié de capotage mobile 6a, 6b, mais ce nombre peut être supérieur à deux, assurent au moins trois rôles fondamentaux dans ce type d'inverseur de poussée. Leur premier rôle est d'être l'élément moteur du déplacement du capotage mobile 6. Leur deuxième rôle est de transmettre, au moins en partie, les efforts subis par le capotage mobile 6 à la structure fixe amont de la nacelle 1 via le cadre 5. Le troisième rôle des vérins 10a, 10b est de fournir la fonction de sécurité par la disposition du verrouillage dans sa structure.

Chaque vérin 10a, 10b est écarté de la distance L de l'élément de guidage 14a, 14b, 14c, 14d le plus voisin. Cet écartement L provoque un couple de torsion qui engendre des efforts parasites dans les structures fixes 2 et le capotage mobile 6a, 6b. Pour remédier à ce problème, les éléments de guidage 14a, 14b, 14c, 14d peuvent être allongés, mais ceci impose la plupart du temps un débordement des éléments structuraux en dehors des lignes aérodynamiques de la nacelle 1. On peut également renforcer structurellement les éléments de guidage en augmentant leur section. Ces solutions entraînent malheureusement une augmentation de masse. Une synchronisation fine des vérins 10a, 10b entre eux permet également de compenser une partie du problème, mais les parades mises en oeuvre procurent deux inconvénients majeurs, le premier est la minimisation de la fiabilité de l'ensemble inverseur et la seconde est l'augmentation de la masse.

La disposition des vérins 10a et 10b dans les zones de l'espace annulaire 9, intermédiaires entre le pylône 4 et l'entretoise 15, zones recouvertes par les grilles de déviation du jet F2, grilles disposées vers l'avant de la nacelle 1, présente des inconvénients supplémentaires. Le passage du flux secondaire F2 à travers la nacelle 1 est partiellement obturé par les vérins 10a, 10b. Il est nécessaire de compenser cette perte de surface par une longueur axiale de l'ensemble de grilles plus grande, ce qui a un impact sur la course de recul du capotage mobile 6. Le corps des vérins 10a, 10b subit un effort de flambage par le flux d'inversion F2. Il est donc nécessaire d'augmenter la section de la structure des vérins 10a, 10b, ce qui augmente la masse de l'ensemble. La tige d'entraînement du vérin est disposée dans le flux F2 lors de l'inversion de poussée du turboréacteur et subit une pollution qu'il est nécessaire de combattre en appliquant un système sophistiqué d'étanchéité qui a un impact sur la masse du vérin et sur sa fiabilité. En outre, la définition des grilles doit tenir compte de l'obturation engendrée par les vérins afin de compenser la section radiale d'inversion perdue. Il est ainsi difficile de prévoir des grilles identiques les unes aux autres, ce qui a pour effet d'augmenter le coût de fabrication de ces éléments. Enfin, l'augmentation du couple de frottement entre les éléments de guidage, par suite du couple de torsion, oblige à avoir une définition du cadre 5 plus renforcée structurellement.

Le document US 4 005 822 décrit par ailleurs un dispositif d'inversion de poussée comprenant les caractéristiques techniques précisées dans le préambule de la revendication 1 de la présente demande de brevet.

Le premier but de l'invention est de proposer un dispositif d'inversion de poussée du type mentionné en introduction dans lequel le moment de torsion sur les éléments de guidage rectiligne est fortement réduit voire supprimé, lors du fonctionnement des moyens de déplacement du capotage mobile.

Un autre but de l'invention est de ménager une installation du vérin et des éléments de guidage susceptibles de réduire la masse de l'inverseur selon les explications fournies précédemment.

L'invention atteint son but par le fait que chaque glissière comporte une paroi externe fendue solidaire d'une structure fixe de la nacelle dans laquelle est monté coulissant un corps oblong solidaire du capotage mobile, ledit corps oblong comportant des moyens coopérant avec les moyens de déplacement associés.

Cette disposition supprime ainsi le couple de torsion. De plus, la paroi externe protège ainsi le corps oblong et les moyens de déplacement contre le flux inversé, notamment contre le flambage et la pollution.

Selon un premier mode de réalisation, les moyens de déplacement associés comportent un vérin de commande.

Ce vérin de commande comporte une vis entraînée en rotation par un bloc de transmission de mouvement et coopérant avec un filetage interne ménagé dans le corps oblong.

Selon une variante de réalisation, la vis est disposée à l'extrémité d'une tige.

Selon une autre variante de réalisation, le filetage interne du corps oblong est prévu dans un embout du type écrou rotulé assujetti au corps oblong.

Le vérin de commande peut également comporter une vis solidaire du corps oblong et entraîné en translation par un bloc de transmission de mouvement.

Selon un deuxième mode de réalisation, les moyens de déplacement associés comportent un bloc de transmission de mouvement entraînant une roue dentée qui engrène avec des dents formées sur une face du corps oblong.

De préférence, la nacelle et la structure interne sont portées par un mât, et il est prévu au moins une glissière de part et d'autre du mât.

Le dispositif d'inversion de poussée comporte avantageusement deux parties d'inverseur disposées de part et d'autre d'un mât, dans ce cas, chacune des parties d'inverseur coopère avec deux glissières diamétralement opposées. Ces glissières sont portées par la structure fixe du turboréacteur dans des zones diamétralement opposées et coopèrent avec les bords des parties semi-cylindriques des inverseurs qui sont situés aux extrémités des zones munies de grilles. Les vérins sont ainsi disposés en dehors des grilles, et ne subissent pas d'efforts latéraux du flux inversé, ni de pollution. Ceci améliore la fiabilité de l'ensemble inverseur.

D'autres avantages et caractéristiques de l'invention ressortiront à la lecture de la description suivante faite à titre d'exemple et en référence aux dessins annexés dans lesquels :
la figure 1 représente une demi-vue schématique, en coupe longitudinale par un plan passant par l'axe de rotation d'un turboréacteur associé, d'un inverseur de poussée à grilles, en position fermée, selon l'art antérieur ;
la figure 2 est une vue selon la ligne II-II de la figure 1, qui montre la disposition des éléments de guidage et des moyens de déplacement axial du capotage mobile selon l'art antérieur ;
la figure 3 montre en perspective, vue de l'avant, un élément de guidage associé à un moyen de déplacement axial selon un premier mode de réalisation de l'invention ;
la figure 4 est une vue de dessus, suivant la flèche IV de la figure 3, de l'avant de l'inverseur de poussée selon l'invention en mode de fonctionnement "inversion de poussée" ;
la figure 5 est une vue de l'avant de l'inverseur de poussée qui montre une première disposition des éléments de guidage et des moyens de déplacement axial du capotage mobile ;
la figure 6 est semblable à la figure 5 et montre une deuxième disposition des éléments de guidage et des moyens de déplacement axial du capotage mobile ;
la figure 7 montre en perspective, vue de l'avant, un élément de guidage associé à un moyen de déplacement axial selon un deuxième mode de réalisation de l'invention ;
la figure 8 montre en coupe une variante de réalisation du premier mode de réalisation qui permet une reprise de l'alignement de la vis de commande ;
la figure 9 montre en coupe une autre variante de réalisation des moyens de déplacement axial qui permet de minimiser le flambage de la vis de commande ; et
la figure 10 représente un autre exemple de disposition de la vis d'entraînement.

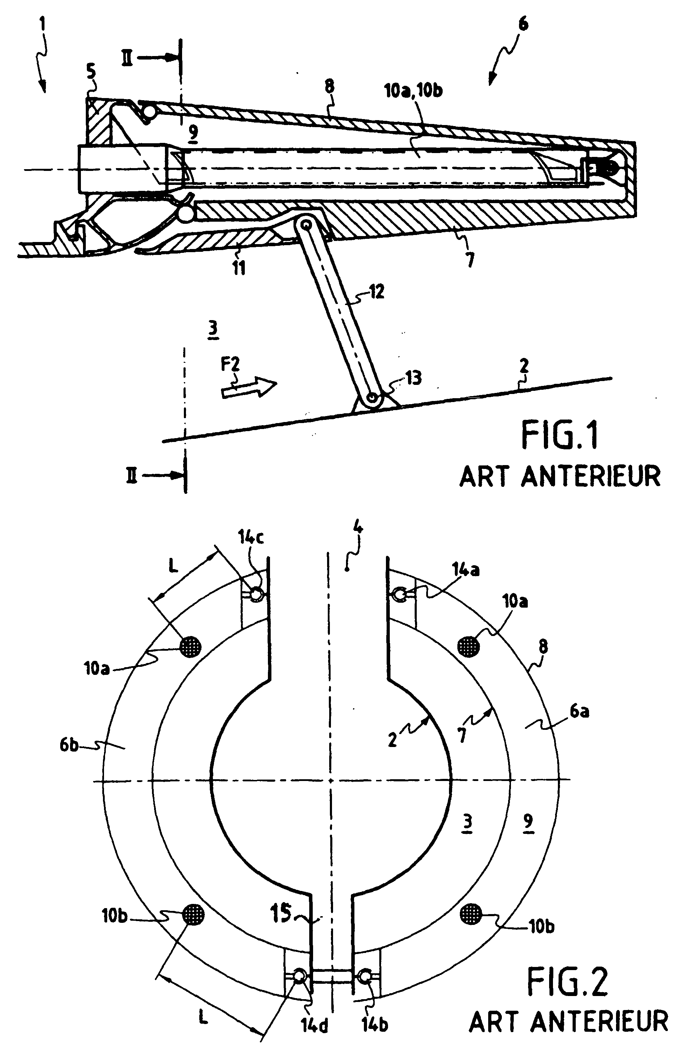

Les figures 1 et 2 ont été commentées en introduction et ne nécessitent pas d'autres explications.

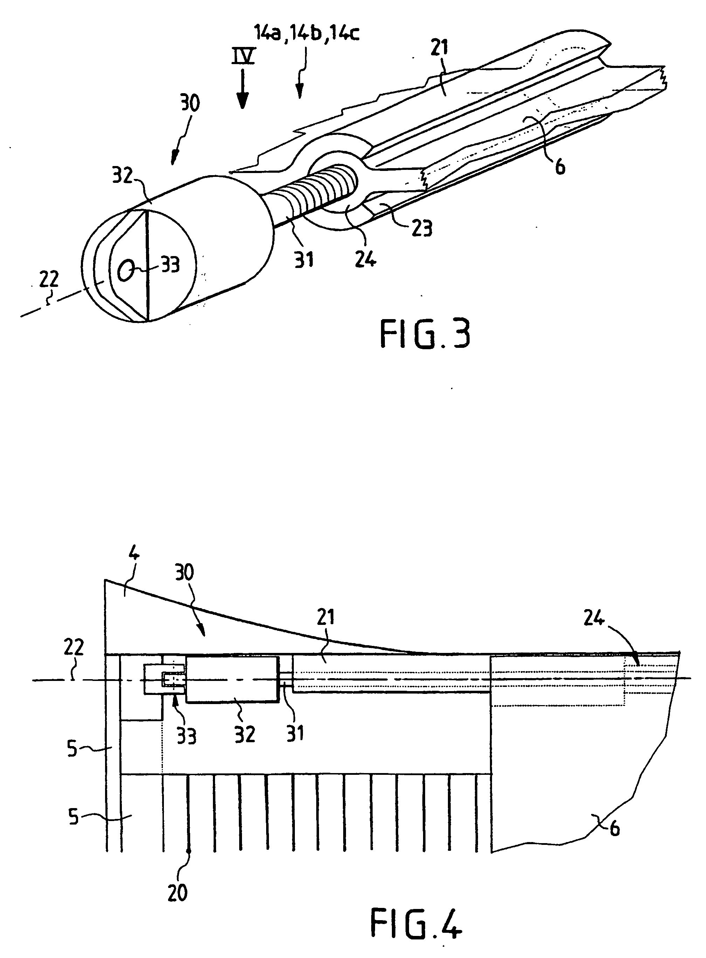

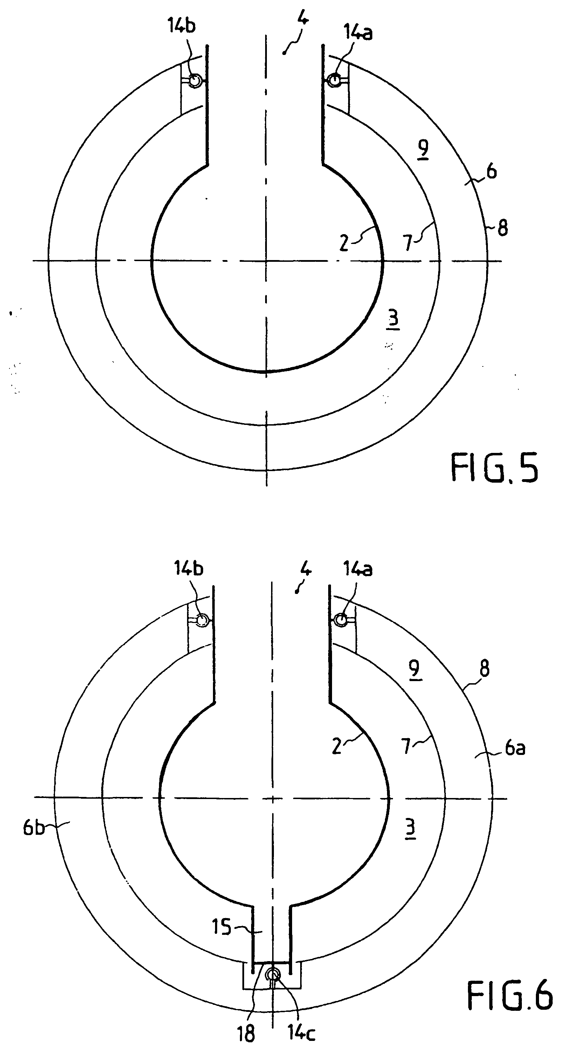

Les figures 5 et 6 montrent une vue de l'avant d'un dispositif d'inversion de poussée qui comporte un capotage axialement mobile 6 formé par une virole interne 7 et une virole externe 8 qui délimitent entre elles un espace 9 dans lequel loge un ensemble de grilles 20 (voir figure 4). La virole interne 7 délimite avec une structure interne 2 entourant le moteur un canal annulaire 3 dans lequel circule un flux secondaire F2 dans le mode de fonctionnement en poussée du turboréacteur. La structure interne 2 est reliée à une aile d'avion par un mât 4 qui supporte également la nacelle fixe entourant la soufflante.

Dans le mode de réalisation montré sur la figure 5, le capotage mobile 6 est maintenu sur le mât 4 au moyen de deux glissières 14a, 14b disposées de part et d'autre du mât 4, ce capotage mobile 6 étant réalisé en une seule pièce.

Dans le mode de réalisation montré sur la figure 6, le capotage mobile 6 est réalisé en deux parties semi-cylindriques 6a, 6b, et chaque partie est montée coulissante sur le mât 4 et sur une entretoise 15 diamétralement opposée au mât 4 par deux glissières 14a, 14c pour la partie 6a et 14b, 14c pour la partie 6b.

De manière avantageuse, les deux parties 6a et 6b sont retenues sur l'entretoise 15 au moyen d'un seul support 18 fixé sur l'entretoise 15, afin de diminuer la masse de l'ensemble. Mais les deux parties 6a et 6b peuvent évidemment être maintenues chacune sur le mât 4 et l'entretoise 15 par deux glissières indépendantes, sensiblement diamétralement opposées, 14a et 14b pour la partie 6a, et 14c, 14d pour la partie 6b, ainsi que cela est montré sur la figure 2.

Les glissières 14a, 14b, 14c (voir la figure 3) et éventuellement 14d se présentent sous la forme d'une gouttière 21, presque cylindrique, qui a un axe 22 parallèle à l'axe du turboréacteur et qui présente latéralement une fente 23. Cette gouttière 21 s'étend au moins sur toute l'étendue axiale des grilles 20.

Un corps oblong 24, prévu sur les bords des extrémités du capotage mobile 6, ou des parties semi-cylindriques 6a, 6b, loge dans chacune des gouttières 21.

Le capotage mobile 6 est déplacé axialement au moyen de vérins de commande 30 ancrés sur le cadre 5 par des chapes rotulées 33, et dont les tiges 31 agissent à l'unisson sur les corps oblongs 24.

Selon le mode de réalisation montré sur la figure 3, la tige 31 est filetée et est entraînée en rotation par un bloc de transmission de mouvement 32. La tige 31 d'axe 22 coopère avec un filetage interne ménagé dans le corps oblong 24. Le bloc de transmission de mouvement 32 peut être pneumatique, électrique ou hydraulique. L'équipage peut être à billes, à rouleaux ou simple selon l'utilisation.

On conçoit que la rotation de la vis 31 entraîne en direct le corps oblong 24 dans la gouttière 21 qui est reliée à la structure fixe de l'inverseur de poussée, dans une direction parallèle à l'axe du turboréacteur qui en est équipé. L'utilisation d'un tel vérin 30 permet un gain de masse et une amélioration de la fiabilité de l'ensemble. En fait le corps oblong 24 fait généralement partie des organes nécessaires à la fonction de translation. Le fait d'utiliser le corps oblong 24 directement comme pièce de transmission de mouvement permet de supprimer une jonction de pièces intermédiaires entre le vérin 30 et le capotage mobile 6, d'ou un gain de masse. Comme il y a moins de pièces à entraîner, on assure en conséquence moins de risques de pannes, d'ou un accroissement de la fiabilité.

L'entraînement par le boîtier de transmission de mouvement 30 peut se faire soit en direct comme cela est représenté sur la figure 3, soit par un renvoi indirect du type cardan. Dans le cas où chaque tige de vérin 31 est entraînée en rotation par son propre boîtier de transmission de commande, ces derniers sont synchronisés.

Ainsi que cela se voit clairement sur la figure 4, les glissières 14a, 14b, 14c et les vérins de déplacement associés 30 sont disposés axialement au voisinage du mât 4, ou d'un élément solidaire de la structure fixe interne 2, en dehors de la surface recouverte par les grilles 20. Les moyens de déplacement du capotage mobile 6 sont ainsi disposés en dehors du flux inversé. Les tiges 31 des vérins 30 logent en outre dans les corps oblongs 24 qui eux-mêmes sont protégés dans les gouttières 21. Ils ne sont pas soumis au flambage ni à la pollution.

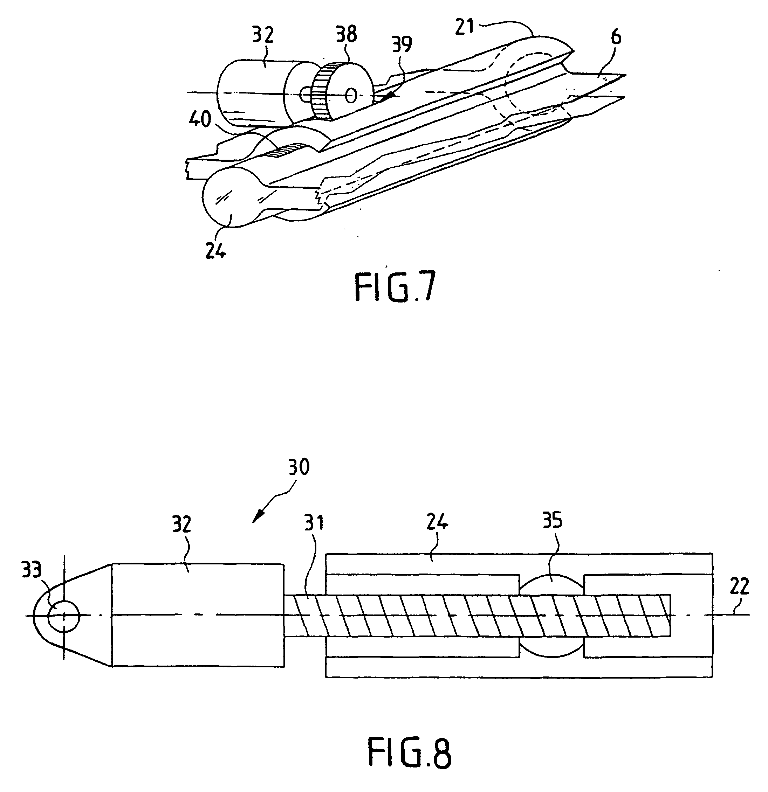

La figure 8 montre une variante de l'entraînement du corps oblong 24 par la tige filetée 31 du vérin 30, qui permet de rattraper l'alignement de l'entraînement par rapport à l'axe 22 de coulissement. Un embout écrou rotulé 35 assujetti au corps oblong 24 est disposé dans une cavité interne du corps oblong 24.

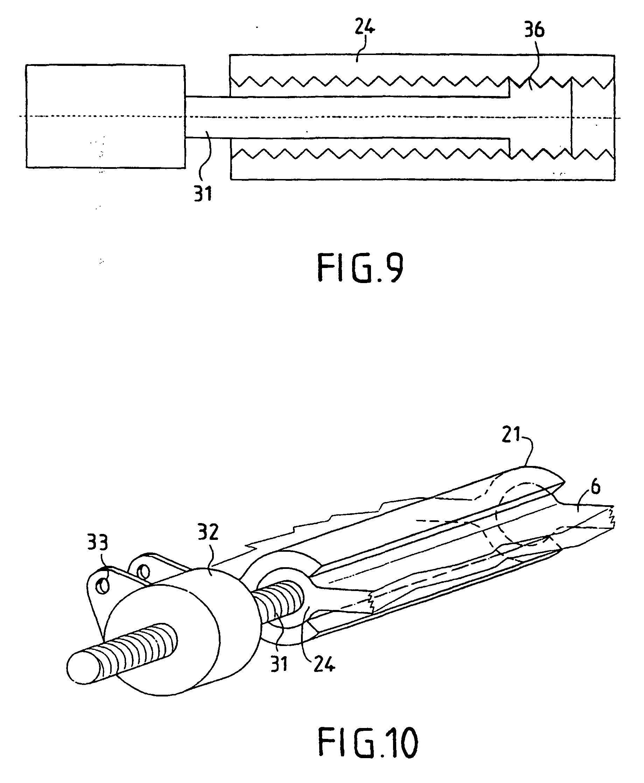

Dans le mode de réalisation montré sur la figure 9 le corps oblong 24 comporte un filetage inférieur, qui coopère avec une vis 36 solidarisée à l'extrémité de la tige 31, entraîné en rotation par le bloc de transmission de mouvement 32. Cette solution permet de remédier au flambage de la tige 31 dû à la vitesse de rotation qui ne serait pas compatible avec les dimensions géométriques retenus pour la tige 31.

Pour palier le problème de flambage de la tige 31 dû à la vitesse de rotation de celle-ci, un autre moyen consiste à lier la tige 31, au corps oblong 24. Cette solution est montrée sur la figure 10. Dans ce cas la tige 31 est entraînée en translation parallèlement à l'axe du turboréacteur par le bloc de transmission de mouvement 32.

La figure 7 montre un autre exemple de moyen pour entraîner le mouvement axial du corps oblong 24 par rapport à la gouttière 21. Le bloc de transmission de mouvement 32 entraîne en rotation une roue dentée 38 qui, à travers une ouverture 39 ménagée dans la paroi de la gouttière 21, engrène avec une réglette dentée 40 ménagée sur une face du corps oblong 24. Cette transmission à crémaillère est disposée au plus près de l'axe 22 de la gouttière 21. Il est à noter que la réglette dentée 40 peut être disposée sur le retour plat du corps oblong près de la fente 23 de la gouttière 21.

## Revendications

1. Dispositif d'inversion de poussée pour turboréacteur d'avion comprenant une nacelle externe qui définit avec une structure interne (2) un canal annulaire (3) de circulation de la veine de flux secondaire, ledit dispositif d'inversion comportant un ensemble de grilles (20) disposées dans la nacelle, un capotage mobile (6) monté sur la nacelle de manière à pouvoir coulisser le long de glissières (14a, 14b, 14c), ledit capotage mobile (6) étant susceptible d'être déplacé entre une position avant dans laquelle il obture l'accès aux grilles (20) et une position arrière dans laquelle les grilles (20) sont découvertes, des moyens (30) pour déplacer le capotage mobile par rapport à la nacelle, et des volets susceptibles d'obturer le canal annulaire lorsque le capotage mobile est dans sa position arrière, afin de dévier le flux secondaire vers les grilles (20), les moyens de déplacement (30) du capotage mobile (6) étant sensiblement disposés dans l'axe (22) médian des glissières (14a, 14b, 14c) qui est parallèle à l'axe du turboréacteur, **caractérisé en ce que** chaque glissière (14a, 14b, 14c) comporte une paroi externe (21) fendue solidaire d'une structure fixe de la nacelle dans laquelle est monté coulissant un corps oblong (24) solidaire du capotage mobile (6), ledit corps oblong (24) comportant des moyens coopérant avec les moyens de déplacement (30) associés.

2. Dispositif selon la revendication 1, **caractérisé par le fait que** les moyens de déplacement associés comportent un vérin de commande (30).

3. Dispositif selon la revendication 2, **caractérisé par le fait que** le vérin de commande (30) comporte une vis (31) entraînée en rotation par un bloc de transmission de mouvement (32) et coopérant avec un filetage interne ménagé dans le corps oblong (24).

4. Dispositif selon la revendication 3, **caractérisé par le fait que** la vis (36) est disposée à l'extrémité d'une tige (31).

5. Dispositif selon la revendication 3, **caractérisé par le fait que** le filetage interne du corps oblong (24) est prévu dans un embout écrou rotulé (35) assujetti au corps oblong (24).

6. Dispositif selon la revendication 2, **caractérisé par le fait que** le vérin de commande (30) comporte une vis (31) solidaire du corps oblong (24) et entraîné en translation par un bloc de transmission de mouvement (32).

7. Dispositif selon la revendication 1, **caractérisé par le fait que** les moyens de déplacement associés comportent un bloc de transmission de mouvement (32) entraînant une roue dentée (38) qui engrène avec des dents (40) formées sur une face du corps oblong (24).

8. Dispositif selon l'une quelconque des revendications 1 à 7, **caractérisé par le fait que** la nacelle et la structure interne (5) sont portées par un mât (4), et **par le fait qu'**il comporte une glissière (14a, 14b) de part et d'autre dudit mât (4).

9. Dispositif selon la revendication 8, **caractérisé par le fait qu'**il comporte deux parties d'inverseur (6a, 6b) disposées de part et d'autre du mât (4), lesdites parties d'inverseur (6a, 6b) coopérant respectivement avec deux glissières (14a, 14c) et deux glissières (14b, 14c) sensiblement diamétralement opposées.

## Claims

1. Thrust inversion device for an aircraft turbojet, comprising an outer pod which defines together with an inner structure (2) an annular channel (3) for circulation of the secondary flow jet, the said inversion device comprising a set of grids (20) which are disposed in the pod, a mobile cowling (6) which is fitted on the pod such as to be able to slide along slides (14a, 14b, 14c), the said mobile cowling (6) being able to be displaced between a front position in which it blocks access to the grids (20) and a rear position in which the grids (20) are uncovered, means (30) for displacing the mobile cowling relative to the pod, and shutters which can block the annular channel when the mobile cowling is in its rear position, in order to divert the secondary flow towards the grids (20), the means (30) for displacement of the mobile cowling (8) being substantially disposed on the median axis (22) of the slides (14a, 14b, 14c) which is parallel to the axis of the turbojet, **characterised in that** each slide (14a, 14b, 14c) comprises a split outer wall (21) which is integral with a fixed structure of the pod, in which there is fitted such as to slide an oblong body (24) which is integral with the mobile cowling (6), the said oblong body (24) comprising means which co-operate with the associated means (30) for displacement.

2. Device according to claim 1, **characterised in that** the associated means for displacement comprise a control jack (30).

3. Device according to claim 2, **characterised in that** the control jack (30) comprises a screw (31) which is rotated by a movement transmission unit (32) and co-operates with an inner thread provided in the oblong body (24).

4. Device according to claim 3, **characterised in that** the screw (36) is disposed at the end of a rod (31).

5. Device according to claim 3, **characterised in that** the inner thread of the oblong body (24) is provided in a nut-type swivel connector (35) which is secured to the oblong body (24).

6. Device according to claim 2, **characterised in that** the control jack (30) comprises a screw (31) which is integral with the oblong body (24) and is entrained in translation by a movement transmission unit (32).

7. Device according to claim 1, **characterised in that** the associated means for displacement comprise a movement transmission unit (32) which drives a toothed wheel (38) which engages with teeth (40) formed on a surface of the oblong body (24).

8. Device according to any one of claims 1 to 7, **characterised in that** the pod and the inner structure (5) are supported by a strut (4), and **in that** it comprises a slide (14a, 14b) on both sides of the said strut (4).

9. Device according to claim 8, **characterised in that** it comprises two inverter parts (6a, 6b) which are disposed on both sides of the strut (4), the said inverter parts (6a, 6b) co-operating respectively with two slides (14a, 14c) and two slides (14b, 14c) which are substantially diametrically opposite.

## Patentansprüche

1. Schubumkehrvorrichtung für Strahltriebwerke von Flugzeugen mit einer externen Triebwerksgondel, die mit einer Innenstruktur (2) einen ringförmigen Umlaufkanal (3) für den Nebenstrom definiert, wobei die Schubumkehrvorrichtung eine Einheit von Gittern (20) aufweist, die in der Triebwerksgondel angeordnet sind, eine verfahrbare Verkleidung (6), die so auf der Triebwerksgondel montiert ist, dass sie auf Führungsschienen (14a, 14b, 14c) gleiten kann, wobei die verfahrbare Verkleidung (6) zwischen einer vorderen Stellung, in der sie den Zugang zu den Gittern (20) verschließt, und einer hinteren Stellung, in der die Gitter (20) aufgedeckt sind, hin- und herbewegt werden kann, Mittel (30), um die verfahrbare Verkleidung auf der Triebwerksgondel zu verschieben, und Klappen, die geeignet sind, den ringförmigen Kanal zu verschließen, wenn sich die verfahrbare Verkleidung in ihrer hinteren Stellung befindet, um den Nebenstrom zu den Gittern (20) umzuleiten, wobei die Mittel (30) zum Verschieben der verfahrbaren Verkleidung (6) im Wesentlichen in der Mittelachse (22) der Führungsschienen (14a, 14b, 14c) angeordnet sind, die parallel zu der Achse des Strahltriebwerkes ist, **dadurch gekennzeichnet, dass** jede Führungsschiene (14a, 14b, 14c) eine Außenwand (21) aufweist, die einstückig mit einer ortsfesten Struktur der Triebwerksgondel ausgebildet ist, in die ein länglicher, mit der verfahrbaren Verkleidung (6) einstückig ausgebildeter Körper (24) verschiebbar montiert ist, wobei der längliche Körper (24) Mittel aufweist, die mit den zugehörigen Verfahrmitteln (30) zusammenwirken.

2. Vorrichtung gemäß Anspruch 1, **dadurch gekennzeichnet, dass** die zugehörigen Verfahrmittel ein Stellglied (30) aufweisen.

3. Vorrichtung nach Anspruch 2, **dadurch gekennzeichnet, dass** das Stellglied (30) eine Schraube (31) aufweist, die von einer Bewegungsübertragungseinheit (32) drehangetrieben wird und mit einem Innengewinde zusammenwirkt, das in dem länglichen Körper (24) angebracht ist.

4. Vorrichtung nach Anspruch 3, **dadurch gekennzeichnet, dass** die Schraube (36) an dem Ende einer Stange (31) angeordnet ist.

5. Vorrichtung nach Anspruch 3, **dadurch gekennzeichnet, dass** das Innengewinde des länglichen Körpers (24) in einem Gelenkstangenkopf (35) vorgesehen ist, der an dem länglichen Körper (24) befestigt ist.

6. Vorrichtung nach Anspruch 2, **dadurch gekennzeichnet, dass** das Stellglied (30) eine mit dem länglichen Körper (24) einstückig ausgebildete Schraube (31) aufweist und von einer Bewegungsübertragungseinheit (32) translatorisch bewegt wird.

7. Vorrichtung nach Anspruch 1, **dadurch gekennzeichnet, dass** die zugehörigen Verfahrmittel eine Bewegungsübertragüngseinheit (32) aufweisen, die ein Zahnrad (38) antreibt, das in Zähne (40) eingreift, die an einer Seite des länglichen Körpers (24) ausgebildet sind.

8. Vorrichtung nach einem der Ansprüche 1 bis 7, **dadurch gekennzeichnet, dass** die Triebwerksgondel und die Innenstruktur (5) von einer Strebe (4) getragen werden, und dass sie auf beiden Seiten der Strebe (4) eine Führungsschiene (14a, 14b) aufweist.

9. Vorrichtung nach Anspruch 8, **dadurch gekennzeichnet, dass** sie zwei Umkehrvorrichtungsteile (6a, 6b) aufweist, die beidseitig der Strebe (4) angeordnet sind, wobei die beiden Umkehrvorrichtungsteile (6a, 6b) mit zwei Führungsschienen (14a, 14c) beziehungsweise zwei Führungsschienen (14b, 14c) zusammenwirken, die einander im Wesentlichen gegenüber liegen.
